# EUROPEAN PATENT APPLICATION

(11) **EP 4 382 569 A1**
(43) Date of publication of application: **12.06.2024**
(21) Application number: 22852897.2
(22) Date of filing: 26.07.2022
(51) Int. Cl.: C08L 67/00, C08G 63/12, C09D 5/02, C09D 167/03

(54) **POLYESTER RESIN COMPOSITION, AQUEOUS DISPERSION, PAINT COMPOSITION, AND COATING FILM**

(30) Priority: 02.08.2021 JP 2021126884
(71) Applicant: TOYOBO MC Corporation, Osaka 530-0001 (JP)
(72) Inventor: MIEDA, Hiroyuki, Otsu-shi, Shiga 520-0292 (JP); MIKAMI, Tadahiko, Otsu-shi, Shiga 520-0292 (JP)
(74) Representative: Müller-Boré & Partner Patentanwälte PartG mbB
(86) International application number: PCT/JP2022/028758
(87) International publication number: WO 2023/013474

(57) **Abstract**

The present invention relates to a polyester resin composition containing a polyester resin (A) which satisfies requirements (i) The polyester resin (A) has an acid value of 100 eq/ton or more; (ii) The polyester resin composition contains substantially no curing agent; and (iii) The polyester resin composition has a storage elastic modulus E' at 200°C of 1.0 × 10⁴ Pa or more after subjected to a heating treatment at 240°C for 1 hour. The polyester resin composition of the present invention is capable of suppressing a harmful outgas and is suitable for a paint for cans having excellent properties such as curing properties, retort resistance, and processability.

## Description

### Technical Field

The present invention relates to a polyester resin composition. In more detail, the present invention relates to a polyester resin composition suitable for a paint for cans, in particular a polyester resin composition suitable for covering an inner surface of cans housing beverages and food (hereinafter, collectively called "food and drink"), and to an aqueous dispersion, a paint composition, and a coating film that contain the polyester resin composition.

### Background Art

Metal cans such as a beverage can and a food can are coated with an organic resin so as to prevent corrosion of metal (corrosion resistance) caused by food and so as not to impair flavor and taste of the contents (flavor properties). These coatings are required to have processability, corrosion resistance, adhesion to a metal material, curing properties, and the like. In some uses, these coatings are sometimes exposed to high-temperature and high-humidity conditions of retort sterilization or the like. Even in such cases, the coating films are required not only to maintain adhesion to a metal material but also to cause no whitening when applied to particularly an outer-surface side of a metal lid or the like.

Conventionally, as a paint having the corrosion resistance and the flavor properties and tolerating a can forming process, widely used are epoxy-based paints such as an epoxy phenolic paint, an epoxy-amino-based paint, and an epoxy acrylic paint; polyester-based paints such as a polyester phenolic paint and a polyester-amino-based paint; and vinyl chloride-based paints. Recent study, however, reports possibility that bisphenol A that is a raw material for epoxy resins affects estrogen action and brains of fetuses and infants. The vinyl chloride-based paints also have a problem of a stabilizer and a problem of generating dioxin in incineration. Formaldehyde that is used as a raw material for phenolic resins, amino resins, and the like and remains in the paint is known to have harmful effects on human bodies, such as carcinogenic properties, and adversely affect the flavor properties of the contents. Further, there is also a concern about environmental contamination and influence on environment of work caused by the use of an organic solvent.

Due to concerns about various adverse effects on human bodies, an aqueous paint that is not based on these raw materials is desired in the market, but the circumstances are that a paint that has performance satisfactory enough for application to cans has not been obtained.

From this viewpoint, there is proposed, as a resin composition for metal containers or metal lids, for example, an aqueous paint composition obtained by dispersing an acrylic modified polyester resin and a β-hydroxyalkylamide crosslinking agent in an aqueous medium, wherein the acrylic modified polyester resin is obtained by graft polymerization of a polyester resin having an ethylenic double bond in a terminal portion thereof, with a polymerizable unsaturated monomer component (Patent Document 1).

Patent Document 2 proposes a paint composition containing polyester polyol and a block polyisocyanate curing agent.

### Prior Art Documents

### Patent Documents

Patent Document 1: Japanese Patent Application Laid-Open (JP-A) No. 2001-81160
Patent Document 2: Japanese Patent Application Laid-Open (JP-A) No. 2006-169535

### Disclosure of the Invention

### Problem that the Invention is to Solve

However, the use of the high-acid-value acrylic modified polyester resin described in Patent Document 1 could not give sufficient processability. There has also been a problem that an unreacted portion of the β-hydroxyalkylamide crosslinking agent is left in the coating film and the curing properties and retort whitening are decreased. A coating film described in Patent Document 2 and obtained by reacting polyester with a block polyisocyanate has a problem of having poor water resistance and causing whitening in sterilization of the contents.

An object of the present invention is to provide a polyester resin and a polyester resin composition that enables curing of the polyester resin by itself even if it contains substantially no curing agent, thus being capable of suppressing a harmful outgas and forming a coating film having excellent properties such as adhesiveness, retort resistance, and processability.

### Means for Solving the Problem

As a result of variously studying the above, the inventors of the present invention have found that a polyester resin composition that contains a polyester resin having a prescribed acid value and that has a certain storage elastic modulus when having undergone a prescribed heating treatment makes it possible for the polyester resin by itself to form a tough coating film with use of substantially no curing agent. The inventors have also found that by further specifying the resin composition and controlling the amount of a catalyst, a polyester resin coating film having excellent balance between the adhesiveness and the processability, generating no harmful outgas, and having remarkably improved retort resistance can be obtained. The inventors have thus arrived at the present invention.

Thus, the present invention comprises the following constitutions.
[1] A polyester resin composition containing a polyester resin (A) and satisfying following requirements (i) to (iii).
   (i) The polyester resin (A) has an acid value of 100 eq/ton or more.
   (ii) The polyester resin composition contains substantially no curing agent.
   (iii) The polyester resin composition has a storage elastic modulus E' at 200°C of 1.0 × 10⁴ Pa or more after subjected to a heating treatment at 240°C for 1 hour.
[2] The polyester resin composition according to [1], wherein the polyester resin (A) has a branched structure.
[3] The polyester resin composition according to [1], wherein the polyester resin (A) contains, as polyol components constituting the polyester resin (A), a diol (a) having two primary hydroxy groups and having no alicyclic structure, and either one or both of a diol (b) having an alicyclic structure and a diol (c) having one primary hydroxy group and one secondary hydroxy group and having no alicyclic structure.
[4] The polyester resin composition according to [1], wherein the polyester resin (A) contains, as polycarboxylic acid components constituting the polyester resin (A), a polycarboxylic acid having a benzene skeleton, and at least one member selected from the group consisting of an aliphatic polycarboxylic acid, an alicyclic polycarboxylic acid, and an aromatic polycarboxylic acid having a naphthalene skeleton.
[5] The polyester resin composition according to [1], wherein the polyester resin (A) contains an unsaturated dicarboxylic acid (d) as a polycarboxylic acid component constituting the polyester resin (A).
[6] The polyester resin composition according to [1], wherein the polyester resin (A) has a storage elastic modulus E' at 200°C of less than 1.0 × 10⁴ Pa after subjected to a heating treatment at 150°C for 30 minutes, and the polyester resin composition further contains at least one catalyst (B).
[7] An aqueous dispersion of polyester resin containing the polyester resin composition according to any one of [1] to [6] and an aqueous medium.
[8] A paint composition containing either one of the polyester resin composition according to any one of [1] to [6] or the aqueous dispersion of polyester resin according to [7].
[9] A coating film containing the polyester resin composition according to any one of [1] to [6].
[10] A metal can including the coating film according to [9].

### Effects of the Invention

The present invention can provide a polyester resin composition that generates no harmful outgas attributed to a curing agent, and that has the curing properties, excellent balance between the adhesiveness and the processability, and remarkably improved retort resistance, and a coating film of the polyester resin composition.

### Mode for Carrying Out the Invention

As hereunder, an embodiment of the present invention will be explained in detail. The polyester resin composition according to the present invention is a polyester resin composition that contains a polyester resin (A) and that satisfies following requirements (i) to (iii).
(i) The polyester resin (A) has an acid value of 100 eq/ton or more.
(ii) The polyester resin composition contains substantially no curing agent.
(iii) The polyester resin composition has a storage elastic modulus E' at 200°C of 1.0 × 10⁴ Pa or more after subjected to a heating treatment at 240°C for 1 hour.

### <Requirement (i)>

Requirement (i) will be explained. The acid value of polyester resin (A) needs to be 100 eq/ton or more. The acid value is preferably 200 eq/ton or more, more preferably 250 eq/ton or more, and further preferably 300 eq/ton or more. When the polyester resin (A) has an acid value of less than the above lower limit value, the number of carboxyl groups which will act as crosslinking points is small and therefore the curing properties are sometimes decreased. Further, when the polyester resin (A) has an acid value of less than the above lower limit value, a pyrolytic reaction proceeds more preferentially than a curing reaction in heating to 240°C and the processability is sometimes decreased. By having an acid value of the above lower limit value or more, the polyester resin (A) is easily formed into an aqueous dispersion. The upper limit value of the acid value of the polyester resin (A) is not particularly limited, but the polyester resin (A) preferably has an acid value of 1200 eq/ton or less so as to reduce unreacted portions of the acid components in an acid addition reaction and the amount of oligomers.

The acid value of the polyester resin (A) of the present invention can be imparted by any method. Examples of a method for imparting an acid value include a method for adding and reacting a polycarboxylic anhydride in a late stage of polycondensation, and a method for forming a high-acid-value prepolymer (oligomer), and next subjecting the prepolymer to polycondensation so as to give a polyester resin having an acid value. Due to easiness of operation and easiness of obtaining a target acid value, the former adding and reacting method is preferable.

Among the compounds for imparting an acid value to the polyester resin (A) of the present invention and having a polycarboxylic anhydride group in a molecule thereof, examples of a carboxylic monoanhydride include phthalic anhydride, succinic anhydride, maleic anhydride, trimellitic anhydride, itaconic anhydride, citraconic anhydride, 5-(2,5-dioxotetrahydrofurfuryl)-3-cyclohexene-1,2-dicarboxylic monoanhydride, hexahydrophthalic anhydride, and tetrahydrophthalic anhydride. At least one compound can be selected from among these examples and used. Among these examples, trimellitic anhydride is preferable from the aspect of versatility and economic efficiency.

Among the compounds for imparting an acid value to the polyester resin (A) of the present invention and having a polycarboxylic anhydride group in a molecule thereof, examples of a carboxylic polyanhydride include pyromellitic anhydride, 1,2,3,4-butanetetracarboxylic dianhydride, 1,2,3,4-pentanetetracarboxylic dianhydride, 3,3',4,4'-benzophenonetetracarboxylic dianhydride, cyclopentanetetracarboxylic dianhydride, 2,3,6,7-naphthalenetetracarboxylic dianhydride, 1,2,5,6-naphthalenetetracarboxylic dianhydride, ethylene glycol bistrimellitate dianhydride, 2,2',3,3'-diphenyltetracarboxylic dianhydride, thiophene-2,3,4,5-tetracarboxylic dianhydride, ethylenetetracarboxylic dianhydride, 4,4'-oxydiphthalic dianhydride, and 5-(2,5-dioxotetrahydro-3-furanyl)-3-methyl-3-cyclohexene-1,2-dicarboxylic anhydride. At least one compound can be selected from among these examples and used. Among these examples, ethylene glycol bistrimellitate dianhydride is preferable.

As to the compounds for imparting an acid value and having a polycarboxylic anhydride group in a molecule thereof, a carboxylic monoanhydride and carboxylic polyanhydride can be used singly or in combination.

### <Requirement (ii)>

Requirement (ii) will be explained. The polyester resin composition according to the present invention contains substantially no curing agent. The phrase "contains substantially no curing agent" means that "the content of a curing agent is less than 1 part by mass (in terms of solid content) relative to 100 parts by mass (in terms of solid content) of the polyester resin".

Here, the curing agent refers to any known curing agent that reacts with the polyester resin (A) of the present invention and thus forms a crosslinking structure. Examples of a form of the crosslinking structure include: a reaction of generating an intermolecular carbon-carbon bond by reacting an unsaturated double bond in the polyester resin through a radical addition reaction, a cationic addition reaction, an anionic addition reaction, or the like; and formation of an intermolecular bond through a condensation reaction, a polyaddition reaction, a transesterification reaction, or the like with a polyvalent carboxylic acid group or a polyhydric alcohol group in the polyester resin. Examples of the curing agent include a phenolic resin, an amino resin, an isocyanate compound, an epoxy compound, a β-hydroxylamide compound, and an unsaturated bond-containing resin.

The content of the curing agent in the polyester resin composition according to the present invention is less than 1 part by mass relative to 100 parts by mass (solid content) of the polyester resin (A). The content is more preferably less than 0.5 part by mass, and further more preferably less than 0.1 part by mass, and most preferably no curing agent is contained. When the content of the curing agent is more than the above range, the polyester resin composition may not only has poor economic efficiency but may also possibly have low processability caused by a self condensation reaction of the curing agent, generate a harmful outgas such as a volatile of a blocking agent and formaldehyde, and have poor long storage stability.

### <Requirement (iii)>

Requirement (iii) will be explained. The polyester resin composition according to the present invention needs to have a storage elastic modulus E' at 200°C of 1.0 × 10⁴ Pa or more after subjected to a heating treatment at 240°C for 1 hour. When the storage elastic modulus E' at 200°C is 1.0 × 10⁴ Pa or more, it is possible to obtain the polyester resin composition having excellent balance between the retort resistance and the processability, and the coating film of the polyester resin composition. The storage elastic modulus E' at 200°C is preferably 1.0 × 10⁵ Pa or more, more preferably 5.0 × 10⁵ Pa or more, and further more preferably 1.0 × 10⁶ Pa or more. When the storage elastic modulus E' at 200°C is less than 1.0 × 10⁴ Pa, the curing properties are insufficient, resulting in insufficient toughness of the coating film. Such a coating film may possibly decrease the retort resistance and the adhesiveness and may not possibly tolerate a process of forming a coated metal plate into a can.

Further, the storage elastic modulus E' at 200°C is preferably 2.0 × 10⁷ Pa or less, more preferably 8.0 × 10⁶ Pa or less, and further more preferably 5.0 × 10⁶ Pa or less.

When the storage elastic modulus E' at 200°C is more than 2.0 × 10⁷ Pa, the coating film has insufficient processability and may not possibly tolerate a process of forming a coated metal plate into a can.

Here, the "storage elastic modulus E' at 200°C after the polyester resin composition is subjected to a heating treatment at 240°C for 1 hour" is a value of the storage elastic modulus E' at 200°C calculated by the following procedure. The polyester resin composition is applied onto a copper foil, such that the thickness after drying is 10 µm, heated at 240°C for 1 hour, and then subjected to an etching treatment for the copper foil using an aqueous ferric chloride solution, and a coating film is thus obtained. The obtained coating film is measured for dynamic viscoelasticity using a dynamic viscoelastic analyzer (DVA-220, manufactured by IT Keisoku Seigyo K.K.) under the conditions of a frequency of 10 Hz, a temperature rise rate of 4°C/min, a chuck distance of 15 mm, and a sample width of 4 mm.

### [Polyester resin (A)]

Next, the polyester resin (A) of the present invention will be explained.

The polyester resin (A) of the present invention is constituted from a polycarboxylic acid component and a polyol component.

The polyester resin (A) of the present invention preferably contains, as a polyol component, a diol (a) (hereinafter, sometimes called a "component (a)") having two primary hydroxy groups and having no alicyclic structure. Examples of the diol (a) contained in the polyester resin (A) of the present invention, and having two primary hydroxy groups and having no alicyclic structure include: aliphatic glycols such as ethylene glycol, 1,3-propanediol, 2-butyl-2-ethyl-1,3-propanediol, 2-methyl-1,3-propanediol, neopentyl glycol, 3-methyl-1,5-pentanediol, 1,4-butanediol, 2,4-diethyl-1,5-pentanediol, 1,6-hexanediol, 2-methyl-1,8-octanediol, 3-methyl-1,6-hexanediol, 4-methyl-1,7-heptanediol, 4-methyl-1,8-octanediol, and 1,9-nonanediol; and polyether glycols such as diethylene glycol, triethylene glycol, polyethylene glycol, polypropylene glycol, and polytetramethylene glycol. At least one compound can be selected from among these examples and used. Among these examples, ethylene glycol, 2-methyl-1,3-propanediol, and 1,6-hexanediol are preferably used.

The copolymerization proportion of the diol (a) contained in the polyester resin (A) of the present invention, and having two primary hydroxy groups and having no alicyclic structure is preferably 20 to 80 mol%, more preferably 20 to 60 mol%, and further more preferably 20 to 40 mol%, in the total polyol components. When the copolymerization proportion is in the above range, the curing properties and the retort resistance are good.

The polyester resin (A) of the present invention preferably contains, as a polyol component, a diol (b) having an alicyclic structure. When the polyester resin (A) contains the diol (b) (hereinafter, sometimes called a "component (b)") having an alicyclic structure, both the processability and the retort resistance are easily achieved. Examples of the diol (b) constituting the polyester resin (A) of the present invention and having an alicyclic structure include 1,2-cyclohexanedimethanol, 1,3-cyclohexanedimethanol, 1,4-cyclohexanedimethanol, a tricyclodecane glycol, and a hydrogenated bisphenol. At least one compound can be selected from among these examples and used. Among these examples, 1,4-cyclohexanedimethanol is preferably used from the aspect of the curing properties, the processability, and the retort resistance.

The copolymerization proportion of the diol (b) constituting the polyester resin (A) of the present invention and having an alicyclic structure is preferably 5 to 50 mol%, more preferably 10 to 40 mol%, and further more preferably 20 to 30 mol%, in the total polyol components. When the copolymerization proportion is in the above range, the processability is good.

The polyester resin (A) of the present invention preferably contains, as a polyol component, a diol (c) (hereinafter, sometimes called a "component (c)") having one primary hydroxy group and one secondary hydroxy group and having no alicyclic structure. Examples of the diol (c) contained in the polyester resin (A) of the present invention, and having one primary hydroxy group and one secondary hydroxy group and having no alicyclic structure include 1,2-propylene glycol and 1,2-butanediol. At least one compound can be selected from among these examples and used. Among these examples, 1,2-propylene glycol is preferably used.

The copolymerization proportion of the diol (c) contained in the polyester resin (A) of the present invention, and having one primary hydroxy group and one secondary hydroxy group and having no alicyclic structure is preferably 5 to 75 mol%, more preferably 10 to 65 mol%, and further more preferably 15 to 50 mol%, in the total polyol components. When the copolymerization proportion is in the above range, the curing properties and the retort resistance are good.

The polyester resin (A) of the present invention preferably contains, as the polyol components, the component (a) and either one or both of the components (b) and (c). The component (a) easily forms an ester bond, whereas the components (b) and (c) more easily cause cleavage of an ester bond than the component (a). Therefore, when the polyester resin (A) contains the component (a) and the component (b) and/or (c), rearrangement and recombination of ester bonds are presumed to be promoted during a heating treatment, causing an increase of the crosslinking density and thus a rise of the storage elastic modulus E', and resulting in formation of the coating film having the curing properties, the retort resistance, the adhesiveness, and the processability.

The polycarboxylic acid component constituting the polyester resin (A) of the present invention is not particularly limited, and examples of the polycarboxylic acid component include: polycarboxylic acids having a benzene skeleton, such as terephthalic acid, isophthalic acid, and orthophthalic acid; and polycarboxylic acids having a naphthalene skeleton, such as 2,6-naphthalenedicarboxylic acid, 1,4-naphthalenedicarboxylic acid, and 1,8-naphthalenedicarboxylic acid. These polycarboxylic acids can be used singly or in combination of two or more thereof. Among these examples, a polycarboxylic acid having a benzene skeleton and a polycarboxylic acid having a naphthalene skeleton are preferably used in combination from the aspect of achieving both the processability and the retort resistance. When a polycarboxylic acid having a benzene skeleton and a polycarboxylic acid having a naphthalene skeleton are used in combination, the use ratio (mole ratio) between the polycarboxylic acid having a benzene skeleton and the polycarboxylic acid having a naphthalene skeleton is preferably 95/5 to 70/30, and more preferably 90/10 to 75/25. When the use ratio is in the above range, the processability and the retort resistance are better and the polyester resin (A) having such a ratio is thus preferable. As to a polycarboxylic acid having a benzene skeleton, terephthalic acid is preferable. As to a polycarboxylic acid having a naphthalene skeleton, 2,6-naphthalenedicarboxylic acid is preferable.

Examples of other polycarboxylic acid component constituting the polyester resin (A) of the present invention include an aliphatic polycarboxylic acid component and an alicyclic polycarboxylic acid component. Examples of the aliphatic polycarboxylic acid component include succinic acid, glutaric, adipic acid, azelaic acid, sebacic acid, dodecanedioic acid, and dimer acid. Examples of the alicyclic polycarboxylic acid component include 1,4-cyclohexanedicarboxylic acid, tetrahydrophthalic acid, hexahydroisophthalic acid, and 1,2-cyclohexenedicarboxylic acid. At least one compound can be selected from among these examples and used. When the polyester resin (A) contains an aliphatic polycarboxylic acid component or an alicyclic polycarboxylic acid component, the processability can be improved. Among these examples, adipic acid and 1,4-cyclohexanedicarboxylic acid are preferable from the aspect of reactivity and economic efficiency.

When the polyester resin (A) of the present invention contains, as constituent units, an aliphatic dicarboxylic acid component and an alicyclic dicarboxylic acid component, the copolymerization proportion thereof is preferably 5 to 40 mol%, and more preferably 10 to 30 mol%, in the polycarboxylic acid components. When the copolymerization proportion is out of the above range, the glass transition temperature of the polyester resin (A) is greatly decreased and the retort resistance is sometimes decreased.

The polyester resin (A) of the present invention also preferably contains, as a polycarboxylic acid component constituting the polyester resin (A), an unsaturated dicarboxylic acid (d) as a constituent unit. When the polyester resin (A) contains the unsaturated dicarboxylic acid (d), the curing properties can be improved due to a reaction of generating an intermolecular carbon-carbon bond caused by cleavage of an unsaturated bond during a heating treatment. Examples of the unsaturated dicarboxylic acid (d) include fumaric acid, maleic acid, itaconic acid, citraconic acid, 2,5-norbornanedicarboxylic acid, tetrahydrophthalic acid, and acid anhydrides thereof. At least one compound can be selected from among these examples and used.

When the polyester resin (A) of the present invention contains, as constituent units, an unsaturated dicarboxylic acid (d), the copolymerization proportion thereof is preferably 5 to 20 mol%, and more preferably 10 to 15 mol%, in the polycarboxylic acid components. When the copolymerization proportion is in the above range, both the processability and the retort resistance can be achieved.

The polyester resin (A) of the present invention preferably has a branched structure. Having a branched structure refers to having a branched structure in the main chain of polyester. For introducing a branched structure into the polyester resin (A), there is, for example, a method for copolymerizing a trifunctional or higher-functional component as part of the polycarboxylic acid component and/or the polyol component in a polycondensation reaction of polyester. Examples of a trifunctional or higher-functional polycarboxylic acid component include trimellitic acid, pyromellitic acid, and benzophenonetetracarboxylic acid. Examples of a trifunctional or higher-functional polyol include glycerine, trimethylolethane, trimethylolpropane, mannitol, sorbitol, pentaerythritol, and α-methylglucoside. When the polyester resin (A) has a branched structure, the crosslinking density at a time of rearrangement and recombination of ester bonds during a heating treatment is increased, resulting in a rise of the storage elastic modulus E', and therefore the curing properties, the retort resistance, the adhesiveness, and the processability can be improved.

The copolymerization proportion of the trifunctional or higher-functional polycarboxylic acid component is preferably 0.1 mol% or more, more preferably 0.5 mol% or more, and further more preferably 1 mol% or more, to the total polycarboxylic acid components defined as 100 mol%. The copolymerization proportion of the trifunctional or higher-functional polycarboxylic acid component is preferably 7 mol% or less, more preferably 6 mol% or less, further more preferably 5 mol% or less, and particularly preferably 4 mol% or less, to the total polycarboxylic acid components defined as 100 mol%. The copolymerization proportion of the trifunctional or higher-functional polyol component is preferably 0.1 mol% or more, more preferably 0.5 mol% or more, and further more preferably 1 mol% or more, to the total polyol components defined as 100 mol%. The copolymerization proportion of the trifunctional or higher-functional polyol component is preferably 5 mol% or less, more preferably 3 mol% or less, further more preferably 2 mol% or less, and particularly preferably 1 mol% or less, to the total polyol components defined as 100 mol%. When the copolymerization proportions of the trifunctional or higher-functional polycarboxylic acid component and the trifunctional or higher-functional polyol component are each more than the above range, flexibility of the polyester resin is lost, resulting in a decrease of processability or gelation generated during polymerization of polyester.

As to the polycarboxylic acid component and the polyol component that constitute the polyester resin (A) of the present invention, a raw material induced from a biomass resource can be used. The biomass resource includes, for example: something in the form of starch, cellulose, or the like into which sunlight energy is converted by plant photosynthesis and which stores the sunlight energy; animals that grow by eating plants; and products obtained by processing plants and animals. More preferred among these biomass resources is a plant resource, and examples of the plant resource include wood, rice straw, rice hull, rice bran, old rice, corn, sugar cane, cassava, sago palms, tofu refuse, corn cobs, tapioca refuse, bagasse, vegetable oil refuse, potatoes, buckwheat, soybeans, oils and fats, waste paper, papermaking residues, marine product residues, livestock wastes, sludge, and food wastes. Corn, sugar cane, cassava, and sago palms are more preferable.

Next, a method for producing the polyester resin (A) of the present invention is described. In an esterification/exchange reaction, all the monomer components and/or low polymers thereof are heated and melted, and thus reacted. The esterification/exchange temperature is preferably 180 to 250°C, and more preferably 200 to 250°C. The reaction time is preferably 1.5 to 10 hours, and more preferably 3 to 6 hours. The reaction time is a time from reaching a desired reaction temperature until the following polycondensation reaction. In the polycondensation reaction, a polyol component is distilled away under reduced pressure at a temperature of 220 to 280°C from an esterified product obtained by the esterification reaction, and the polycondensation reaction is progressed until reaching a desired molecular weight. The polycondensation reaction temperature is preferably 220 to 280°C, and more preferably 240 to 275°C. The degree of decompression is preferably 130 Pa or less. An insufficient degree of decompression tends to prolong the polycondensation time and is therefore not preferable. The pressure is preferred to be gradually reduced over 30 to 180 minutes that are the decompression time from atmospheric pressure to reaching 130 Pa or less.

In the esterification/exchange reaction and the polycondensation reaction, polymerization is performed using as necessary an organic titanate compound such as tetrabutyl titanate, germanium dioxide, antimony oxide, and an organic tin compound such as tin octylate. An organic titanate compound is preferable from the aspect of reaction activity, and germanium dioxide is preferable from the aspect of coloring of resin.

The polyester resin (A) thus obtained has a glass transition temperature of preferably 40°C or more, and more preferably 60°C or more, in terms of water resistance, particularly retort resistance of the coating film. The upper limit of the glass transition temperature is not particularly limited but usually 130°C or less.

The polyester resin (A) of the present invention has a reduced viscosity of preferably 0.2 to 0.6 dl/g, and more preferably 0.3 to 0.5 dl/g. When the polyester resin (A) has a reduced viscosity of 0.2 dl/g or less, the curing properties are insufficient, resulting in insufficient toughness of the coating film. Such a coating film may not possibly tolerate a process of forming a coated metal plate into a can. On the other hand, when the polyester resin (A) has a reduced viscosity of 0.6 dl/g or more, the melt viscosity and the solution viscosity are increased, and not only the operability is decreased but also imparting of an acid value may not possibly be sufficiently performed due to a decrease of the number of terminal hydroxy groups.

The polyester resin (A) of the present invention preferably has a storage elastic modulus E' at 200°C of less than 1.0 × 10⁴ Pa after subjected to a heating treatment at 150°C for 30 minutes. The storage elastic modulus E' is preferably less than 1.0 × 10³ Pa, more preferably less than 1.0 × 10² Pa, and may be even less than 1.0 × 10¹ Pa. When the polyester resin (A) has a storage elastic modulus E' at 200°C of less than the above value after subjected to a heating treatment under the heating conditions of a relatively low temperature of around 150°C, generation of aggregates can be suppressed at a time of the polyester resin (A) being dissolved in a solvent or formed into an aqueous dispersion.

### [Catalyst (B)]

The polyester resin composition according to the present invention preferably further contains a catalyst (B). When the polyester resin composition contains the catalyst (B), the self crosslinking properties of the polyester resin (A) during a heating treatment is promoted, resulting in a rise of the storage elastic modulus E' and enabling an improvement of the performance of the cured film. Examples of the catalyst include: acid catalysts such as sulfuric acid, p-toluenesulfonic acid, dodecylbenzenesulfonic acid, naphthalenesulfonic acid, dinonylnaphthalenesulfonic acid, dinonylnaphthalenedisulfonic acid, camphorsulfonic acid, and phosphoric acid, and amine-blocked products thereof (partially neutralized products thereof obtained by adding an amine); organic tin compounds such as dibutyltin dilaurate; titanium compounds such as titanium tetrabutoxide; zinc compounds such as zinc acetate; hafnium compounds such as a hafnium chloride THF complex; and rare earth compounds such as scandium triflate. One or two or more in combination can be used from these examples. Among these examples, dodecylbenzenesulfonic acid and a neutralized product thereof are preferable from the aspect of compatibility with the polyester resin (A) and sanitation.

The blending ratio (A)/(B) between the polyester resin (A) and the catalyst (B) used in the present invention is preferably 100/0.01 to 0.5 (parts by mass), more preferably 100/0.05 to 0.4 (parts by mass), and most preferably 100/0.1 to 0.3 (parts by mass). When the blending ratio is in the above range, the storage elastic modulus E' of the polyester resin composition can be improved.

In the polyester resin composition according to the present invention, the catalyst (B) may be contained in the polyester resin (A) or may be added later. The catalyst (B) is preferably added after the production of the polyester resin (A) from the viewpoint of avoiding gelation during polymerization of the polyester resin (A).

The polyester resin composition according to the present invention may have a radical polymerization inhibitor (C) added thereto. The radical polymerization inhibitor (C) is used mainly for preventing gelation caused by cleavage of unsaturated bonds at a time of polymerizing the polyester resin (A), but may also be added after the polymerization so as to increase the storage stability of the polyester resin. Examples of the radical polymerization inhibitor (C) include known radical polymerization inhibitors such as a phenolic antioxidant, a phosphorus-based antioxidant, an amine-based antioxidant, a sulfur-based antioxidant, a nitro compound-based antioxidant, and inorganic compound-based antioxidant.

Examples of the phenolic antioxidant include 2,5-di-t-butylhydroquinone, 4,4'-butylidenbis(3-methyl-6-t-butylphenol), 1,1,3-tris(2-methyl-4-hydroxy-5-t-butylphenyl)butane, 1,3,5-tris-methyl-2,4,6-tris(3,5-di-t-butyl-4-hydroxybenzyl)benzene, and tris(3,5-di-t-butyl-4-hydroxyphenyl)isocyanurate, and derivatives thereof.

Examples of the phosphorus-based antioxidant include tri(nonylphenyl) phosphite, triphenyl phosphite, diphenylisodecyl phosphite, trioctadecyl phosphite, tridecyl phosphite, diphenyldecyl phosphite, 4,4'-butylidene-bis(3-methyl-6-t-butylphenyl ditridecyl phosphite), distearyl-pentaerythritol diphosphite, and trilauryl trithiophosphite, and derivatives thereof.

Examples of the amine-based antioxidant include phenyl-beta-naphthylamine, phenothiazine, N,N'-diphenyl-p-phenylenediamine, N,N'-di-betanaphthyl-p-phenylenediamine, N-cyclohexyl-N'-phenyl-p-phenylenediamine, aldol-alpha-naphthylamine, and a 2,2,4-trimethyl-1,2-dihydroquinoline polymer, and derivatives thereof.

Examples of the sulfur-based antioxidant include thiobis(N-phenyl)-beta-naphthylamine, 2-mercaptobenzothiazole, 2-mercaptobenzimidazole, tetramethylthiuram disulfide, and nickel isopropyl xanthate, and derivatives thereof.

Examples of the nitro compound-based antioxidant include 1,3,5-trinitrobenzene, p-nitrosodiphenylamine, p-nitrosodimethylanilin, 1-chloro-3-nitrobenzene, o-dinitrobenzene, m-dinitrobenzene, p-dinitrobenzene, p-nitrobenzoic acid, nitrobenzene, and 2-nitro-5-cyanothiophene, and derivatives thereof.

Examples of the inorganic compound-based antioxidant include: FeCl₃, Fe(CN)₃, CuCl₂, CoCl₃, Co(ClO₄)₃, Co(NO₃)₃, and Co₂(SO₄)₃.

Among the antioxidants described above, the radical polymerization inhibitor (C) used in the present invention is preferably a phenolic antioxidant and an amine-based antioxidant in terms of thermal stability, and those having a melting point of 120°C or more and a molecular weight of 200 or more are more preferable, and those having a melting point of 170°C or more are further more preferable. More preferable are specifically phenothiazine, 4,4'-butylidenbis(3-methyl-6-t-butylphenol), and the like.

The blending ratio (A)/(C) between the polyester resin (A) and the radical polymerization inhibitor (C) used in the present invention is preferably 100/0.001 to 0.5 (parts by mass), more preferably 100/0.01 to 0.1 (parts by mass), and most preferably 100/0.02 to 0.08 (parts by mass). When the blending ratio is in the above range, gelation during the production of the polyester resin (A) can be suppressed.

The polyester resin composition according to the present invention can, according to the required properties, have blended thereto a known inorganic pigment such as titanium oxide and silica, phosphoric acid and an esterified product thereof, or a known additive such as a surface smoothing agent, a defoamer, a dispersant, and a lubricant. In particular a lubricant is important so as to impart lubricity of the coating film needed at a time of forming a DI can, a DR (or DRD) can, or the like. Suitable examples of the lubricant include a fatty acid ester wax that is an esterified product of a polyol compound and a fatty acid, a silicon-based wax, a fluorine-based wax, a polyolefin wax such as polyethylene, a lanolin-based wax, a montan wax, and a microcrystalline wax. These lubricants can be used singly or in a mixture of two or more thereof.

The polyester resin composition according to the present invention can be dissolved in a known organic solvent and thus formed into a paint. Examples of the organic solvent used for forming a paint include toluene, xylene, ethyl acetate, butyl acetate, methyl ethyl ketone, methyl isobutyl ketone, cyclohexanone, isophorone, methyl cellosolve, butyl cellosolve, ethylene glycol monoethyl ether acetate, diethylene glycol monoethyl ether acetate, ethylene glycol monoacetate, methanol, ethanol, butanol, ethylene glycol monoethyl ether, ethylene glycol monobutyl ether, diethylene glycol monobutyl ether, and Solvesso. At least one compound is selected from among these examples and used in consideration of solubility, evaporation rate, and the like.

The polyester resin composition according to the present invention can be formed into a powder paint by a known crushing method. Examples of the known crushing method include a crushing technique. In the crushing technique, a mixture of the polyester resin composition according to the present invention, and a rust-preventive pigment and an additive as necessary, and the like is dry-mixed by a mixer such as a tumbler mixer and a Henschel mixer, and melt-kneaded by a kneader. As to the kneader, a general kneader can be used such as a single-screw or twinscrew extruder, a three-roll mill, and Labo plastomill. The kneaded product is cooled and solidified and the solidified product is roughly crushed and finely crushed so as to give a crushed product. Examples of a crusher include a jet crusher that performs crushing using a supersonic jet stream, and an impact crusher that introduces a solidified product into a space formed between a high-speed rotating rotator (rotor) and a stator (liner) and crushes the solidified product. The crushed product may have further added thereto an additive as necessary. By classifying the crushed product, the powder is adjusted to have a desired particle size and a desired particle size distribution, and thus a powder paint composition can be obtained. For the classification, a known classifier can be used that is capable of removing excessively crushed toner mother particles through centrifugal or pneumatic classification. For example, a swivel pneumatic classifier (rotary pneumatic classifier) or the like can be used.

The polyester resin composition according to the present invention can also have blended thereto other resin for the purpose of modification such as imparting of flexibility and adhesion of the coating film. Examples of the other resin include amorphous polyester, crystalline polyester, an ethylene-polymerizable unsaturated carboxylic acid copolymer, and an ethylene-polymerizable carboxylic acid copolymer ionomer. By blending at least one resin selected from these examples, the flexibility and/or the adhesion of the coating film can sometimes be imparted.

The polyester resin composition according to the present invention can be applied to one surface or both surfaces, or an edge surface as necessary of any metal plate that can be used for cans for beverages and canned products, lids and caps of the cans, and the like, and that are made from a metal material. Examples of the metal material include tinplate, tin free steel, and aluminum. The metal plates made from these metal materials may be used after preliminarily subjected to a phosphoric acid treatment, a chromic acid chromate treatment, a phosphoric acid chromate treatment, an anticorrosion treatment with another rust-preventive treatment agent, or a surface treatment performed for the purpose of improving the adhesion of the coating film.

The polyester resin composition according to the present invention can be applied to a metal plate by a known painting method such as roll coater painting and spray painting, and cured. The painting film thickness is not particularly limited, but the dried film thickness is preferably in a range of 3 to 18 µm, and more preferably in a range of 5 to 15 µm. The conditions for baking the coating film are usually a temperature range of about 180 to 260°C and a time of about 10 minutes to 2 hours, and more preferably a temperature range of about 200 to 240°C and a time of about 5 minutes to 1 hour.

### [Aqueous dispersion of polyester resin]

The polyester resin composition according to the present invention can also be dispersed in an aqueous medium and used as an aqueous dispersion of polyester resin.

As a method for forming the polyester resin (A) of the present invention into an aqueous dispersion, there are, for example, a dispersion method (a) for dissolving the polyester resin (A) in a water-soluble organic solvent capable of dissolving the polyester resin (A) and successively adding a basic compound as necessary and water; and a dispersion method (b) for mixing the polyester resin (A) and water, a water-soluble organic solvent capable of dissolving the polyester resin (A), and a basic compound as necessary, and heating the mixture. Alternatively, when the amount of an organic solvent is desired to be reduced or when an aqueous dispersion is desired to be formed by completely removing an organic solvent, it is possible to perform a dispersion process by using an organic solvent having a boiling point of 100°C or less, and then extract the solvent by heating or under reduced pressure. The polyester resin (A) of the present invention is preferred to be dispersed by the former method (a) in terms of film-forming properties.

In this case, the temperature of the organic solvent during the dissolution of the polyester resin (A) is preferably 40 to 160°C, more preferably 50 to 140°C, further more preferably 60 to 120°C, and most preferably 70 to 100°C. When the temperature is less than 40°C, the dissolution of the polyester resin (A) is sometimes insufficient and therefore the entanglement of molecular chains cannot sufficiently be resolved. When the temperature is more than 160°C, the possibility of causing degradation of the polyester resin (A) is increased. Examples of the organic solvent capable of dissolving the polyester resin (A) by being heated in a temperature range of 40 to 160°C include methyl ethyl ketone, dimethylacetamide, dimethylformamide, N-methylpyrrolidone, tetrahydrofuran, 1,4-dioxane, 1,3-dioxane, 1,3-dioxolane, 1,2-hexanediol, methyl cellosolve, butyl cellosolve, ethyl carbitol, butyl carbitol, propylene glycol monopropyl ether, propylene glycol monobutyl ether, and triethylene glycol monobutyl ether. Among these examples, methyl ethyl ketone, butyl cellosolve, propylene glycol monopropyl ether, and propylene glycol monobutyl ether are preferable.

When the polyester resin (A) is dissolved at 100°C or more, it is necessary to obtain an aqueous dispersion by cooling the polyester resin solution to a temperature of 100°C or less and then successively adding water and a basic compound as necessary to the resin solution under stirring, and thus performing phase transition.

As to the basic compound used when the polyester resin (A) of the present invention is formed into an aqueous dispersion, a compound is preferable that volatilizes in a drying or baking step during the formation of the coating film, and for example, ammonia and/or an organic amine compound having a boiling point of 250°C or less may be used. Preferable examples of the basic compound include triethylamine, N,N-diethylethanolamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, dimethylaminopropylamine, methyliminobispropylamine, 3-methoxypropylamine, monoethanolamine, diethanolamine, triethanolamine, morpholine, N-methylmorpholine, and N-ethylmorpholine. These basic compounds are needed in an amount that can at least partially neutralize the carboxyl groups of the polyester resin (A). Specifically, the basic compound is desired to be added in 0.5 to 1.5 equivalents with respect to the carboxyl group equivalent.

The average particle size of the aqueous dispersion of polyester resin according to the present invention is very important because it greatly affects the appearance of the coating film and the storage stability. The average particle size is preferably 30 to 250 nm, more preferably 50 to 200 nm, and particularly preferably 70 to 150 nm. When the average particle size is more than 250 nm, not only the dispersion stability is greatly decreased, but also the film-forming properties are decreased, and therefore the appearance of the obtained coat is degraded. Conversely, when the average particle size is less than 30 nm, the film-forming properties tend to be remarkably improved, but fusion and aggregation between dispersed particles easily occur due to this tendency, resulting in increasing the possibility of thickening and dispersion failure.

The aqueous dispersion of polyester resin according to the present invention is preferably prepared at a resin solid content concentration of 10 to 45 mass%, more preferably 15 to 40 mass%, and further more preferably 20 to 35 mass%. The aqueous dispersion of polyester resin having a resin solid content concentration of more than 45 mass% has high viscosity and easily causes aggregation between resin particles and therefore considerably decreases the dispersion stability. The aqueous dispersion of polyester resin having a resin solid content concentration of less than 10 mass% cannot be said to be practical in both production and usage aspects.

The aqueous dispersion of polyester resin according to the present invention is optimal as a paint for an inner surface of cans for food and beverages. For the use as a paint for the inner surface of cans for food and beverages, various additives are sometimes blended according to the purpose. It is possible to blend, without impairing the purpose of the present invention such as food sanitation and flavor properties, a leveling agent and a surfactant for improving application properties and smoothness and appearance of the coating film, a lubricant for preventing scratches of the coating film, further a coloring pigment, in some cases a polyester resin other than the polyester resin of the present invention, or a resin other than polyester resin, for example, an acrylic resin emulsion and a polyurethane resin emulsion.

A paint containing the aqueous dispersion of polyester resin according to the present invention can be applied to a metal substrate for cans, such as aluminum, stainless steel, and tinplate, by a gravure coater, a comma coater, or spraying. The painting film thickness is not particularly limited, but usually the dried film thickness is preferably in a range of 3 to 18 µm, and more preferably in a range of 5 to 15 µm. The conditions for baking the coating film are usually a temperature range of about 180 to 260°C and a time of about 10 minutes to 2 hours, and more preferably a temperature range of about 200 to 240°C and a time of about 5 minutes to 1 hour.

### Examples

As hereunder, the present invention will be more specifically illustrated by referring to Examples although the present invention is not limited to those Examples. Evaluations of various properties were carried out in accordance with the following methods. The unit simply represented by "part" means "part by mass", and "%" means "mass%".

### <Polyester resin (A)>

### (1) Measurement of resin composition

A sample of the polyester resin (A) was dissolved in deuterated chloroform and subjected to 1H-NMR analysis using nuclear magnetic resonance (NMR) apparatus 400-MR manufactured by Varian Inc. The mole ratio between components was obtained from the ratio of integral values in the analysis.

### (2) Measurement of reduced viscosity (unit: dl/g)

A sample (0.1 g) of the polyester resin (A) was dissolved in 25 cc of a phenol/tetrachloroethane (mass ratio 6/4) mixed solvent, and the reduced viscosity was measured at 30°C.

### (3) Measurement of glass transition temperature (Tg)

The glass transition temperature (Tg) was measured by a differential scanning calorimeter (Seiko Instruments Inc. (SII), DSC-200). A sample (5 mg) of the polyester resin (A) was placed in an aluminum container with a snap-in lid and sealed therein. The container was cooled to - 50°C using liquid nitrogen and next heated to 150°C at 20°C/min. On the endothermic curve obtained through this process, the temperature corresponding to the intersection of the base line before the endothermic peak and the tangent line approaching the endothermic peak was defined as the glass transition temperature (Tg, unit: °C).

### (4) Measurement of acid value

A sample (0.2 g) of the polyester resin (A) was dissolved in 40 ml of chloroform and titrated with a 0.01 N ethanol solution of potassium hydroxide so as to obtain the equivalent per 10⁶ g (eq/ton) of the polyester resin. Phenolphthalein was used as an indicator.

### <Preparation of polyester resin composition>

The polyester resin (A) in an amount of 100 parts by weight (solid content) was dissolved in cyclohexanone/Solvesso-150 (weight ratio 1/1) so as to have a viscosity appropriate for painting. Polyester resin compositions (solid content: about 35 mass%) were obtained according to the blending shown in Tables 2 and 3.

### (5) Measurement of storage elastic modulus E'

The storage elastic modulus E' at 200°C after a heating treatment at 240°C for 1 hour was calculated by the following procedure. The polyester resin composition was applied onto a copper foil, such that the thickness after drying was 10 µm, heated at 240°C for 1 hour, and then subjected to an etching treatment for the copper foil using an aqueous ferric chloride solution, and a coating film was thus obtained. The obtained coating film was measured for dynamic viscoelasticity using a dynamic viscoelastic analyzer (DVA-220, manufactured by IT Keisoku Seigyo K.K.) under the conditions of a frequency of 10 Hz, a temperature rise rate of 4°C/min, a chuck distance of 15 mm, and a sample width of 4 mm.

The storage elastic modulus E' at 200°C after a heating treatment at 150°C for 30 minutes was obtained in the same manner except for changing the heating treatment conditions to 150°C and 30-minute heating.

When the storage elastic modulus E' was lower than 1.0 × 10⁴ Pa, the coating film was broken during the measurement and the value could not be calculated.

### <Preparation of test piece>

The polyester resin composition was applied to one surface of tinplate (JIS G 3303 (2008) SPTE, 70 mm × 150 mm × 0.3 mm) with a bar coater such that the dried film thickness was 10 + 2 µm, and cured by performing baking under the baking conditions of 240°C (PMT: peak metal temperature) for 1 hour, and the resultant product was used as a test piece (hereinafter, called a "test piece").

### (6) Evaluation of processability

The processability was evaluated by subjecting the obtained test piece to bending performed at 180° in the direction in which the cured film came outside, and measuring the energization value which reflects a degree of a crack generated in the bent portion of the cured film. The bending was performed with nothing held in the bent portion (so-called 0T). An aluminum sheet electrode (width 20 mm, depth 50 mm, thickness 0.5 mm) was prepared on which a sponge (width 20 mm, depth 50 mm, thickness 10 mm) having been immersed in a 1% aqueous solution of NaCl was placed. A location around the center of the bent portion of the test piece was brought into contact with the sponge in parallel with the 20-mm side of the sponge. A direct-current voltage (5.0 V) was applied between the aluminum sheet electrode and the non-painted portion of the rear surface of the test piece, and the energization value was measured. A smaller energization value means better bending properties.

### (Determination)

∘∘: less than 0.5 mA
∘: 0.5 mA or more and less than 1.0 mA
Δ: 1.0 mA or more and less than 2.0 mA
×: 2.0 mA or more

### (7) Evaluation of curing properties

A rubbing test was performed by pressing, onto the cured film surface of the test piece, a gauze felt having been immersed in methyl ethyl ketone such that 1 cm² of the gauze felt was in contact with the cured film surface, and placing a load of 500 g on the gauge felt. The curing properties were evaluated by the number of rubbing movements (a reciprocating movement was counted as once) performed until the cured film peels, according to the following criteria.

### (Determination)

oo: no peeling of the coating film and no change shown on the cured film were observed even after 50 times or more rubbings
o: peeling of the cured film and exposure of tinplate were observed after 25 to 49-time rubbings
Δ: peeling of the cured film and exposure of tinplate were observed after 16 to 24-time rubbings
×: peeling of the cured film and exposure of tinplate were observed after 15 times or less rubbings

### (8) Evaluation of adhesiveness

A 100-square grid at 1-mm intervals was made with a cutter on the cured film surface of the test piece, and scotch tape was adhesively put on the grid and peeled at an angle of 60°. The adhesion to metal was evaluated by the proportion of no peeling generated on the grid. No peeling of the grid is indicated as 100%, and peeling of the entire grid is indicated as 0%.

### (Determination)

oo: 100% (no peeling)
∘: 75% or more and less than 1000
Δ: 30% or more and less than 75%
×: less than 30%

### (8) Evaluation of retort resistance

The test piece was placed in a standing position in a stainless steel cup, into which ion-exchanged water was poured to the half height of the test piece. The stainless steel cup was set in a pressure vessel of a retort tester (ES-315 manufactured by TOMY KOGYO CO., LTD.) and a retort treatment was performed at 125°C for 30 minutes. The evaluation of the retort resistance after the treatment was conducted for the vapor contact portion of the cured film that is generally considered to be exposed to severer conditions. The whitening and the blister state of the cured film were determined by visual inspection according to the following criteria.

### (Determination)

∘∘: good (without whitening and blister)
o: slight whitening but no blister
Δ: some degree of whitening and/or some blisters
×: remarkable degree of whitening and/or remarkable blisters

### Synthetic Example (a) of polyester resin (A)

Into a 3-L four-neck flask were charged 670 parts by mass of dimethyl terephthalate, 100 parts by mass of dimethyl 2,6-naphthalenedicarboxylate, 50 parts by mass of fumaric acid, 8 parts by mass of trimellitic anhydride, 190 parts by mass of ethylene glycol, 330 parts by mass of 1,2-propanediol, 190 parts by mass of 1,4-cyclohexanedimethanol, and 0.4 part by mass (0.03 mol% relative to the total acid components) of tetra-n-butyl titanate (hereinafter, sometimes abbreviated as TBT) as a catalyst. The resultant mixture was gradually heated to 230°C over 3 hours and thus subjected to an esterification reaction. Next, the system was gradually decompressed to 10 mmHg over 1 hour and polymerized, and heated to a temperature of 250°C and further subjected to late-stage polymerization under vacuum at 1 mmHg or less for 50 minutes. When having reached a target molecular weight, the system was cooled to 210°C in a nitrogen atmosphere. Next, 26 parts by mass of trimellitic anhydride were charged and the system was continuously stirred in a nitrogen atmosphere at 200 to 230°C for 30 minutes. A resultant product was extracted and a polyester resin (Synthetic Example (a)) of the present invention was thus obtained. The obtained polyester resin had a reduced viscosity of 0.33 dl/g, a glass transition temperature (Tg) of 65°C, and an acid value of 300 eq/ton.

### Synthetic Examples (b) to (s)

Polyester resins (Synthetic Examples (b) to (s)) of the present invention were produced by a direct polymerization method in the same manner as in Synthetic Example (a), except that the ingredient composition was changed so that the polyester resins had the resin composition shown in Table 1.

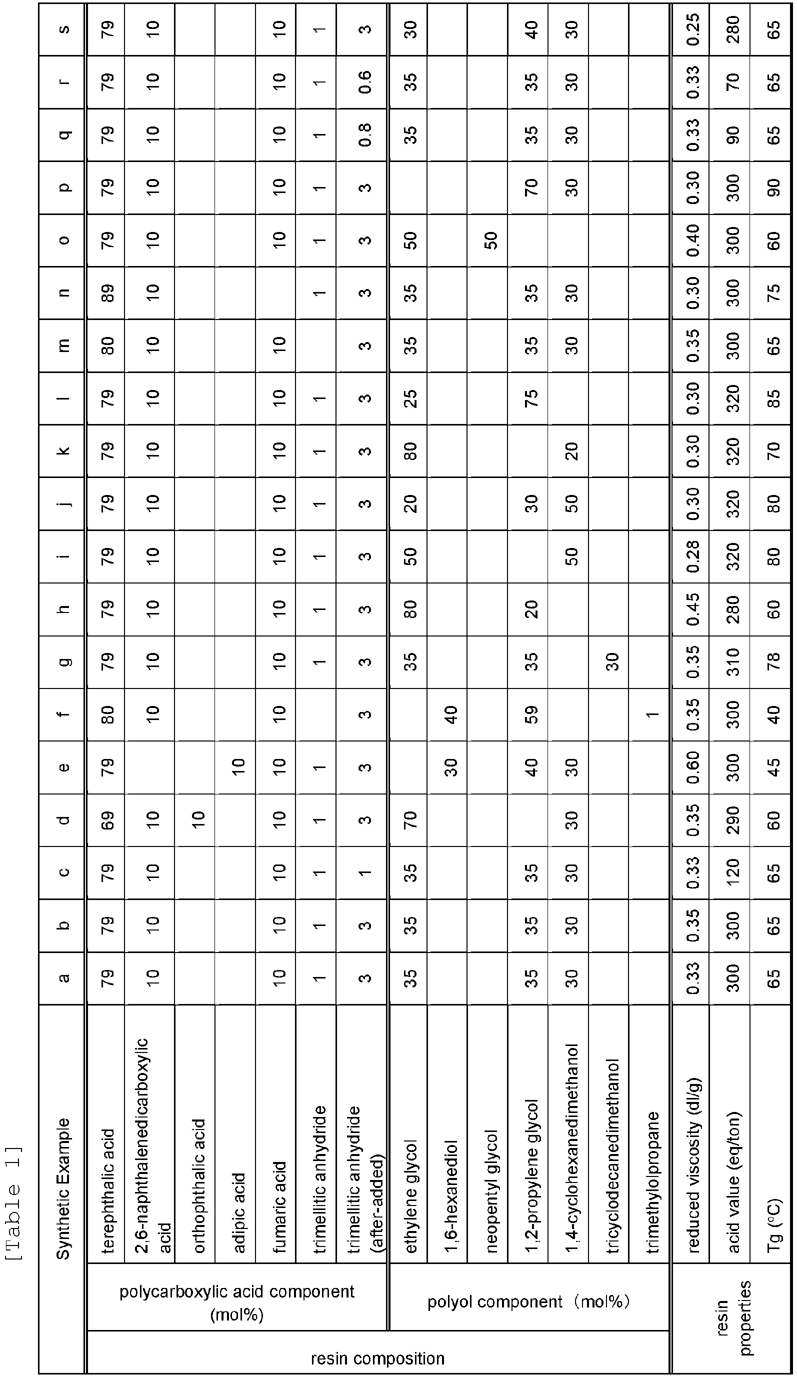

Polyester resin compositions were prepared using the obtained polyester resins and evaluated for the processability, the curing properties, the adhesiveness, and the retort resistance. Tables 2 and 3 show the blending of the polyester resin compositions and the evaluation results.

**[Table 2]**

| item | | | Example | | | | | | | |
|---|---|---|---|---|---|---|---|---|---|---|
| | | | 1 | 2 | 3 | 4 | 5 | 6 | 7 | 8 |
| polyester resin composition (solid weight ratio) | resin | polyester resin | a 100 | b 100 | c 100 | d 100 | e 100 | f 100 | 9 100 | h 100 |
| | catalyst | dodecylbenzenesulfonic acid | | 0.3 | 0.3 | 0.3 | 0.3 | 0.3 | 0.3 | 0.3 |
| evaluation | | storage elastic modulus (Pa) <after treated at 240°C for 1 hour> | 9.0 × 10⁵ | 4.0 × 10⁶ | 5.0 × 10⁵ | 4.0 × 10⁶ | 4.0 × 10⁶ | 3.0 × 10⁶ | 4.0 × 10⁶ | 3.0 × 10⁶ |
| | | storage elastic modulus (Pa) <after treated at 150°C for 30 minutes> | < 1.0 × 10⁴ | < 1.0 × 10⁴ | < 1.0 × 10⁴ | < 1.0 × 10⁴ | < 1.0 × 10⁴ | < 1.0 × 10⁴ | < 1.0 × 10⁴ | < 1.0 × 10⁴ |
| | | processability | ○○ | ○○ | ○○ | ○○ | ○○ | ○○ | ○○ | ○○ |
| | | curing properties | ○○ | ○○ | ○ | ○○ | ○○ | ○○ | ○○ | ○○ |
| | | adhesiveness | ○○ | ○○ | ○○ | ○○ | ○○ | ○○ | ○○ | ○○ |
| | | retort resistance | ○ | ○○ | ○ | ○○ | ○○ | ○○ | ○○ | ○○ |

| 9 | 10 | 11 | 12 | 13 | 14 | 15 | 16 | | | |
|---|---|---|---|---|---|---|---|---|---|---|
| polyester resin composition (solid weight ratio) | resin | polyester resin | i 100 | j 100 | k 100 | l 100 | m 100 | n 100 | o 100 | p 100 |
| | catalyst | dodecylbenzenesulfonic acid | 0.3 | 0.3 | 0.3 | 0.3 | | | | |
| evaluation | | storage elastic modulus (Pa) <after treated at 240°C for 1 hour> | 3.0 × 10⁶ | 3.0 × 10⁶ | 3.0 × 10⁶ | 3.0 × 10⁶ | 3.0 × 10⁵ | 3.0 × 10⁴ | 1.7 × 10⁴ | 1.5 × 10⁴ |
| | | storage elastic modulus (Pa) <after treated at 150°C for 30 minutes> | < 1.0 × 10⁴ | < 1.0 × 10⁴ | < 1.0 × 10⁴ | < 1.0 × 10⁴ | < 1.0 × 10⁴ | < 1.0 × 10⁴ | < 1.0 × 10⁴ | < 1.0 × 10⁴ |
| | | processability | ○○ | ○○ | ○○ | ○○ | ○ | ○ | ○ | Δ |
| | | curing properties | ○○ | ○○ | ○○ | ○○ | ○ | ○ | ○ | ○ |
| | | adhesiveness | ○○ | ○○ | ○○ | ○○ | ○ | ○ | ○ | ○ |
| | | retort resistance | ○○ | ○○ | ○○ | ○○ | Δ | Δ | Δ | Δ |

**[Table 3]**

| item | | | Comparative Example | | |
|---|---|---|---|---|---|
| | | | 17 | 18 | 19 |
| polyester resin composition (solid weight ratio) | resin | polyester resin | q 100 | r 100 | s 100 |
| | catalyst | dodecylbenzenesulfonic acid | | | |
| | curing agent | PR-521 () | | | 5 |
| evaluation | | storage elastic modulus (Pa) <after treated at 240°C for 1 hour> | < 1.0 × 10⁴ | < 1.0 × 10⁴ | 1.2 × 10⁵ |
| | | storage elastic modulus (Pa) <after treated at 150°C for 30 minutes> | < 1.0 × 10⁴ | < 1.0 × 10⁴ | < 1.0 × 10⁴ |
| | | processability | × | × | × |
| | | curing properties | × | × | Δ |
| | | adhesiveness | × | × | Δ |
| | | retort resistance | × | × | Δ |

| | | | | | |
|---|---|---|---|---|---|
| ( 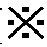 ) PR-521: phenolic resin curing agent (PHENODUR PR-521 manufactured by Allnex) | | | | | |

As is clear from Table 2, the cured films (coating films) obtained from the polyester resin compositions containing the polyester resins (A) of the present invention are excellent in all the processability, the curing properties, the adhesiveness, and the retort resistance.

### Industrial Applicability

The present invention relates to a polyester resin composition and an aqueous dispersion of polyester resin that have excellent processability, curing properties, adhesiveness, and retort resistance, and to a paint and a coating film that contain the composition or the dispersion. The present invention is suitable as a main agent of a paint applied to, for example, metal cans for food and beverages.

## Claims

1. A polyester resin composition containing a polyester resin (A) and satisfying following requirements (i) to (iii).
(i) The polyester resin (A) has an acid value of 100 eq/ton or more.
(ii) The polyester resin composition contains substantially no curing agent.
(iii) The polyester resin composition has a storage elastic modulus E' at 200°C of 1.0 × 10⁴ Pa or more after subjected to a heating treatment at 240°C for 1 hour.

2. The polyester resin composition according to claim 1, wherein the polyester resin (A) has a branched structure.

3. The polyester resin composition according to claim 1, wherein the polyester resin (A) contains, as polyol components constituting the polyester resin (A), a diol (a) having two primary hydroxy groups and having no alicyclic structure, and either one or both of a diol (b) having an alicyclic structure and a diol (c) having one primary hydroxy group and one secondary hydroxy group and having no alicyclic structure.

4. The polyester resin composition according to claim 1, wherein the polyester resin (A) contains, as polycarboxylic acid components constituting the polyester resin (A), a polycarboxylic acid having a benzene skeleton, and at least one member selected from the group consisting of an aliphatic polycarboxylic acid, an alicyclic polycarboxylic acid, and a polycarboxylic acid having a naphthalene skeleton.

5. The polyester resin composition according to claim 1, wherein the polyester resin (A) contains an unsaturated dicarboxylic acid (d) as a polycarboxylic acid component constituting the polyester resin (A).

6. The polyester resin composition according to claim 1, wherein the polyester resin composition has a storage elastic modulus E' at 200°C of less than 1.0 × 10⁴ Pa after subjected to a heating treatment at 150°C for 30 minutes, and the polyester resin composition further contains at least one catalyst (B).

7. An aqueous dispersion of polyester resin containing the polyester resin composition according to any one of claims 1 to 6 and an aqueous medium.

8. A paint composition containing either one of the polyester resin composition according to any one of claims 1 to 6 or the aqueous dispersion of polyester resin according to claim 7.

9. A coating film containing the polyester resin composition according to any one of claims 1 to 6.

10. A metal can including the coating film according to claim 9.
